# NEUE EUROPÄISCHE PATENTSCHRIFT

(11) **EP 0 239 849 B2**
(45) Veröffentlichungstag und Bekanntmachung des Hinweises auf die Entscheidung über den Einspruch: **08.10.1997**
(45) Hinweis auf die Patenterteilung: 11.12.1991
(21) Anmeldenummer: 87103655.4
(22) Anmeldetag: 13.03.1987
(51) Int. Cl.: C09D 133/06, C08L 33/06

(54) **Verfahren zur einschichtigen Beschichtung von Finish-Folien und Endloskanten mit wässrigen, pigmentierten Zweikomponentenlacken**
Process for the single coating of finishing foils and endless borders using two-component aqueous pigmented lacquers
Procédé pour revêtements en une seule couche de feuilles pour couche de fixation et bordures sans fin avec une laque aqueuse et pigmentée à deux composants

(30) Priorität: 29.03.1986 DE 3610764
(43) Veröffentlichungstag der Anmeldung: 07.10.1987
(73) Patentinhaber: BASF Lacke + Farben AG, 48165 Münster-Hiltrup (DE)
(72) Erfinder: Dickerhof, Karlheinz, Dr., D-4406 Drensteinfurt (DE); Schwarz, Günther, Dr., D-4400 Münster (DE)
(74) Vertreter: Münch, Volker, Dr.

(56) Entgegenhaltungen:
- GB-A- 1 178 903
- JP-A-51 036 235
- US-A- 4 303 581
- "Thermosetting acrylic emulsions", Talak & Pontis, in Paint & Resin (1983), Vol. 53, Nr. 6, Seiten 34-37, 49

## Beschreibung

Die Erfindung betrifft ein Verfahren zur einschichtigen Beschichtung von Finish-Folien und Endloskanten.

Imprägnierte Papiere, die auf Platten verpreßt eine Vorbearbeitung im Sinne einer Grundierung darstellen (Grundierfolie) oder häufig auch eine dekorative Wirkung entfalten (Dekorfolie), sind in der Möbel- und Plattenindustrie seit langem bewährt Die Verknappung und Verteuerung echter Furniere hat zu einem verstärkten Einsatz letzterer Folien ganz wesentlich beigetragen. Die Folien müssen nach dem Verpressen auf Span- oder Holzfaserhartplatten nachlackiert werden, da sonst der Oberflächeneffekt nicht ausreichend ist.

Im Zug der Vereinfachßung des Produktionsablaufs setzt sich eine verbesserte Art imprägnierter Papiere, die Fertigfolie; mehr und mehr durch. Hierbei handelt es sich um imprägnierte unifarbige oder bedruckte Papierfolien, die im Anschluß an die Imprägnierung schon beim Folienhersteller mit einem Lackanstrich versehen werden.

Die so erhaltenen Finish-Folien und Endloskanten (zur kontinuierlichen Kantenbeschichtung) werden als Rollenware an die Möbel- und Platten industrie geliefert, wo sie unter Druck- und Hitzeeinwirkung mit Substraten, wie z.B. Span- oder Hartfaserplatten verleimt werden. Auf diese Weise werden Flächen erhalten, die in der Regel keiner weiteren Lackierung mehr bedürfen, also "preßfallend" weiterverarbpitet werden können.

Die in Rede stehenden Finish-Folien bzw. Endloskanten können sowohl mit einem pigmentierten als auch mit einem Klarlack lackiert werden.

In jedem Fall müssen die Lacke und die aus den Lacken hergestellten Beschichtungen hohen Anforderungen gerecht werden.

So sollen sowohl bei der Beschichtung von Finish-Folien und Endloskanten als auch bei der Weiterverarbeitung der beschichteten Folien bzw. Kanten keine oder nur geringe Mengen an organischen Lösungsmitteln und/oder Formaldehyd emittiert werden.

Außerdem ist es erwünscht, daß sich die lackierten aber noch nicht verpreßten Folien nicht krümmen oder gar einrollen.

Besonders wichtig ist, daß die zur Beschichtung der Finish-Folien und Endloskanten verwendeten Lacke nach einer unter 60 Sekunden, in der Regel 10 bis 20 Sekunden dauernden Wärmebehandlung bei 140 bis 210°C soweit ausgehärtet sind, daß sie die bei der Herstellung der Platten bzw. Möbelteile angewandten Preßbedingungen (zB. 5 bis 30 Sekunden bei 150 bis 180 °C und 5 bis 20 kp/cm²; verschärfte Preßbedingungen: bis 180 Sekunden bei 170-180°C und bis zu 30 kp/cm²) ohne Blockeigenschaften und Verfärbungen zu zeigen unbeschadet überstehen. Die so erhaltenen Oberflächen sollen einen möglichst geringen Metallabrieb und eine möglichst hohe Kratzfestigkeit aufweisen sowie die in der DIN-Norm 68861 Gruppe A geforderten Resistenzwerte möglichst erreichen.

In der Gruppe Ader DIN 68861 werden folgende Anforderungen an die zu prüfenden Oberflächen gestellt:

| Prüfmittel | A | |
|---|---|---|
| | Ewd | Erg |
| 1 Essigsäure | 16 h | 0 |
| 2 Zitronensäure | 16 h | 0 |
| 3 Natriumcarbonat | 16 h | 0 |
| 4 Ammoniakwasser | 16 h | 0 |
| 5 Äthylalkohol | 16 h | 0 |
| 6 Weißwein, Rotwein, Südwein | 16 h | 0 |
| 7 Bier | 16 h | 0 |
| 8 Cola-Getränke | 16 h | 0 |
| 9 Pulverkaffee | 16 h | 0 |
| 10 Schwarzer Tee | 16 h | 0 |
| 11 Schwarzer Johannisbeersaft | 16 h | 0 |
| 12 Kondensmilch | 16 h | 0 |
| 13 Wasser | 16 h | 0 |
| 14 Benzin | 16 h | 0 |
| 15 Aceton | 16 h | 0 |
| 16 Äthyl-Butylacetat | 16 h | 0 |
| 17 Butter | 16 h | 0 |
| 18 Olivenöl | 16 h | 0 |
| 19 Senf | 16 h | 0 |
| 20 Kochsalz | 16 h | 0 |
| 21 Zwiebel | 16 h | 0 |
| 22 Lippenstift | 16 h | 0 |
| 23 Desinfektionsmittel | 16 h | 0 |
| 24 Schwarze Kugelschreiber-Pastentinte | 16 h | 0 |
| 25 Stempelfarbe | 16 h | 0 |
| 26 Reinigungsmittel | 16 h | 0 |
| 27 Reinigungslösung | 16 h | 0 |
| Ewd = Einwirkdauer des Prüfmittels Erg = Ergebnis | | |

### Beschreibung der Ergebnisse

Aus der vergleichenden Betrachtung der geprüften und ungeprüften Fläche ist das Ergebnis der Prüfung nach folgender Bewertungsskala anzugeben:
0 Keine sichtbaren Veränderungen
1 Eben erkenbare Änderungen in Glanz oder Farbe
2 Leichte Veränderungen in Glanz oder Farbe; die Struktur der Prüffläche ist nicht verändert
3. Starke Markierungen sichtbar; die Struktur der Prüffläche ist jedoch weitgehend unbeschädigt
4. Starke Markierungen sichtbar; die Struktur der Prüffläche ist verändert
5. Prüffläche stark verändert bzw. zerstört.

Es besteht eine große Nachfrage nach pigmentierten Foliendecklacken mit hohem Deckvermögen.

Die oben erwähnten Forderungen nach einer geringen Lösungsmittelemission kann nur von wäßrigen Lacksystemen erfüllt werden.

Oberflächen, die eine hohe Kratzfestigkeit und einen möglichst geringen Metallabrieb aufweisen und die die in der DIN-Norm 68861 Gruppe A geforderten Resistenzwerte möglichst erreichen, sind mit pigmentierten Systemen sehr viel schwieriger zu realisieren als mit unpigmentierten Systemen.

So werden zum Beispiel die Oberfächeneigenschaften - insbesondere die Metallabriebeigenschaften - von Beschichtungen, die zum Beispiel aus wasserverdünnbaren, säurehärtenden Melamin und/oder Harnstoffharze als Bindemittel enthaltenden Lacken hergestellt worden sind, mit steigendem Pigmentgehalt, d. h. steigendem Deckvermögen immer schlechter. Ein hohes Deckvermögen aufweisende Beschichtungen dieses Typs weisen deshalb nur dann gute Oberflächeneigenschaften auf, wenn sie mit einem schützenden Klarlack überzogen worden sind. Die Applikation einer zweiten schützenden Klarlackschicht bringt aber die Nachteile mit sich, daß zur Herstellung der Finish-Folien bzw. Endloskanten ein zusätzlicher Arbeitsgang notwendig wird und daß der Folienhersteller eine im Vergleich zum Einschichtverfahren viel aufwendigere und damit teuerere Lackvorratshaltung in Kauf nehmen muß.

Außerdem haben Lacke auf Basis von säurehärtenden Melamin- und/oder Harnstoffharzen den Nachteil, daß sie während der Verarbeitung und danach verhältnismäßig viel Formaldehyd emittieren.

Der Erfindung liegt die Aufgabe zugrunde, ein Verfahren zur einschichtigen Beschichtung von Finish-Folien und Endloskanten zur Verfügung zu stellen.

Mit dem neuen Verfahren sollen vor allem Oberflächen erhalten werden, die ein hohes Deckvermögen aufweisen und nach einer unter 60 Sekunden, in der Regel 10 bis 20 Sekunden dauernden Wärmebehandlung bei 140 bis 210°C soweit ausgehärtet sind, daß sie die bei der Herstellung der Platten bzw. Möbelteile angewandten Preßbedingungen - insbesondere die im steigendem Maße angewandten verschärften Preßbedingungen - ohne Blockeigenschaften und Verfärbungen zu zeigen, unbeschadet überstehen. Die so erhaltenen Oberflächen sollen einen möglichst geringen Metallabrieb und eine möglichst hohe Kratzfestigkeit aufweisen und die in der DIN-Norm 68861 Gruppe A geforderten Resistenzwerte möglichst weitgehend erreichen.

Weiterhin soll sowohl während des neuen Verfahrens als auch bei der Weiterverarbeitung der beschichteten Folien bzw. Endloskanten möglichst wenig Formaldehyd emittiert werden.

Schließlich soll nach der Applikation kein Krümmen oder gar Einrollen der Folien auftreten.

In "Thermosetting Acrylic Emulsions" (Talak, Pontis, Paint & Resin 1983, Volume 53, Nr. 6, 34 ff) (1) werden unpigmentierte Überzugszusammensetzungen beschrieben, die im wesentlichen aus wäßrigen Emulsionen carboxyl-, hydroxyl- und methylolamidgruppenhaltiger Polyacrylate, Hexamethoxymethylmelamin, dem Ammoniumsalz der p-Toluolsulfonsäure als geblocktem Härtungskatalysator und Butylcellosolve bestehen.

Die in (1) offenbarten wäßrigen Beschichtungszusammensetzungen sollen für eine ganze Reihe von Anwendungsgebieten - unter anderem auch zum Beschichten von Papier - geeignet sein.

In (1) ist jedoch kein Hinweis darauf zu finden, daß die dort beschriebenen Lacksysteme zur Herstellung von pigmentierten, eine hohe Deckfähigkeit aufweisenden einschichtig applizierbaren Foliendecklacken geeignet sind.

Versuche, die in (1) beschriebenen Beschichtungszusammensetzungen für den oben näher bezeichneten Zweck einzusetzen, führten nur zu unbefriedigenden Resultaten.

Nach dem Verpressen der mit den in (1) offenbarten Lacken lackierten Folien wurden Oberflächen erhalten, die vor allem bei der Prüfung mit Rotwein, Pulverkaffee und schwarzem Tee sehr schlechte Prüfergebnisse erhielten (vergleiche auch Ausführungen zur DIN 68861 Gruppe A).

In der GB-A-1,178,903 (2) werden Einkomponentenlacke beschrieben, die ein Aminoplastharz und ein carboxyl-, hydroxyl- und methylolamidgruppenhaltiges Polyacrylatharz enthalten. Die in (2) beschriebenen Einkomponentenlacke sind zur Lackierung von metallischen Substraten, insbesondere Automobilkarosserien, geeignet. Ein vor der der vorliegenden Erfindung zugrundeliegenden Aufgabenstellung stehender Fachmann kann (2) keinerlei Hinweise zur Lösung der Aufgabenstellung entnehmen.

In der US-A-4,303,581 (3) werden wäßrige, Pigmente enthaltende Einkomponentenlacke beschrieben, die ein hydroxyl- und carboxylgruppenhaltiges Polyacrylatharz, ein verestertes Epoxidharz und ein Aminoplastharz enthalten und zur Herstellung von Füllerschichten bei der Lackierung von Automobilkarosserien verwendet werden. Ein vor der der vorliegenden Erfindung zugrundeliegenden Aufgabenstellung stehender Fachmann kann (3) keiner/ei Hinweise zur Lösung der Aufgabenstellung entnehmen.

Die der vorliegenden Erfindung zugrundeliegende Aufgabe konnte überraschenderweise durch Bereitstellung eines Verfahrens zur einschichtigen Beschichtung von Finish-Folien und Endloskanten gelöst werden, bei dem die Finish-Folien bzw. Endloskanten mit einem wäßrigen, aus den Komponenten (A) und (B) bestehenden, Pigmente und andere übliche Additive enthaltenden Zweikomponentenlack beschichtet und der Naßfilm anschließend 10 bis 55, vorzugsweise 10 bis 20 sec. bei 140 bis 210°C ausgehärtet wird, dadurch gekennzeichnet, daß als Zweikomponentenlack ein Lack verwendet wird, dessen erste Komponente (Komponente (A)) 0,1 bis 15 Gew.-%, vorzugsweise 2 bis 10 Gew.-%, bezogen auf das Gesamtgewicht der Komponente (A) eines Salzes aus einer Säure und einem Amin als potentiellen Härtungskatalysator und 10 bis 90 Gew.-%, vorzugsweise 20 bis 65 Gew.-%, bezogen auf das Gesamtgewicht der Komponente (A) einer wäßrigen Dispersion eines selbstvernetztenden Polyacrylatharzes enthält, wobei als potentieller Härtungskatalysator ein durch Umsetzung einer Säure mit 2-Amino-2-ethylpropandiol-1,3 und/oder 2-Amino-2-methylpropanol hergestelltes Säuresalz eingesetzt wird und das Polyacrylatharz als die die Selbstvernetzung ermöglichenden Gruppen Säureamidderivatgruppen enthält, die der allgemeinen Strukturformel -CO-N(R¹)-CH(R²)-OR³ entsprechen, wobei
- R¹ =: H-Atom oder eine -CH(R²)-OR³ Gruppierung
- R² =: H-Atom oder eine -COOR⁴ Gruppe
- R³ =: H-Atom oder ein 1 bis 10 C-Atome enthaltender Kohlenwasserstoffrest, bevorzugt Methyl-, Ethyl-, (iso)Propyl- oder (iso)Butylrest
- R⁴ =: Alkylrest mit 1 bis 5 C-Atomen
und daß dessen zweite Komponente (Komponente (B)) 20 bis 90 Gew.-%, vorzugsweise 70 bis 90 Gew.-%, bezogen auf das Gesamtgewicht der Komponente (B) eines in einem wäßrigem Medium dispergierten oder gelösten veretherten Melaminharzes oder eines in einem wäßrigen Medium dispergierten oder gelösten veretherten Melaminharz/Harnstoffharzgemisches enthält und daß dessen Komponenten (A) und (B) vor der Applikation in einem solchen Verhältnis gemischt werden, daß auf ein Gewichtsteil selbstvernetzendes Polyacrylatharz 0,4 bis 1,0, bevorzugt 0,6 bis 0,8 Gewichtsteile verethertes Melaminharz oder 0,4 bis 1,5, bevorzugt 1,0 bis 1,2 Gewichtsteile verethertes Melaminharz/Harnstoffharzgemisch kommen.

Im folgenden sollen das erfindungsgemäße Verfahren und vorteilhafte Ausgestaltungen des erfindungsgemässen Verfahrens näher erläutert werden.

Unter wäßrigem Lack ist ein Lack zu verstehen, dessen flüssige Verdünnungsmittel mindestens zu 95 Gew.-%, bevorzugt zu 98 bis 100 Gew.-%, bezogen auf die Summe aller flüssigen Verdünnungsmittel, aus Wasser bestehen. Daneben kann der Lack auch noch organische Lösungsmittel, wie z. b. heterocylische oder aliphatische Kohlenwasserstoffe, ein- oder mehrwertige Alkohole, Ether, Ester und Ketone, wie z. b. N-Methylpyrrolidon, Butanol, Ethyl- und Butylglykol sowie deren Acetate, Butyldiglykol, Ethylenglykoldibutylether, Ethylenglykoldiethylether, Diethylenglykoldimethylether, Cydohexanon, Methylethylketon, Aceton, Isophoron,Propylenglykol oder Mischungen davon enthalten.

Bei den erfindungsgemäß eingesetzten Lacksystemen handelt es sich um pigmentierte Systeme, die vorzugsweise soviel Pigmente enthalten, daß sie eine hohe Deckfähigkeit aufweisen.

Die Pigmente werden vorzugsweise in die Komponente (A) eingearbeitet

Der Pigmentgehalt ist je nach gewünschter Deckfähigkeit und je nach Pigment sehr unterschiedlich und kann zwischen 0,1 bis 50 Gew.-%, vorzugsweise zwischen 5 und 40 Gew.-%, ganz besonders bevorzugt zwischen 7 und 30 Gew.-%, bezogen auf das Gesamtgewicht der Komponente (A) liegen.

Der jeweils optimale Pigmentgehalt kann vom Durchschnittsfachmann mit Hilfe von einfach durchzuführenden Routineuntersuchungen gefunden werden.

Als Pigmente können alle anorganischen und organischen Pigmente eingesetzt werden, die sowohl wasserbenetzbar als auch bei den angewandten Temperaturen nicht sublimierbar sind und die sich unter den Verfahrens- und pH-Bedingungen (pH 2 bis pH 10) nicht im Farbton verändern.

Beispiele für geeignete Pigmente sind Titandioxid des Rutiltyps, gelbe, rote und schwarze Eisenoxide, Ruß und Phthalocyanine.

Bevorzugt wird Titandioxid als Pigment eingesetzt. Als Beispiele für übliche Additive, die in den Komponenten der erfindungsgemäßen Lacke enthalten sein könen, seien beispielhaft genannt : Füllstoffe (Bariumsulfat, Kieselsäurederivate ...), Verlaufs- und Benetzungsmittel (Natriumsalze von Polyacrylaten ...), Emulgatoren (ethoxylierte Alkylphenole, ethoxylierte Fettsäuren ...), Entschäumer, Weichmacher (ethoxyliertes Glycerin ...), Mattierungsmittel und Wachse.

Die erfindungsgemäß eingesetzten Lacke sind Zweikomponentensysteme, bestehend aus der Komponente (A) und (B). Getrennt sind die beiden Komponenten über sehr lange Zeit lagerstabil.

Vor der Applikation werden die beiden Komponenten(A) und (B) gemischt und es wird ein Gemisch erhalten, dessen Topfzeit bei Raumtemperatur vom Verhältnis, in dem die Komponenten (A) und (B) gemischt worden sind, abhängt. Die Arbeitsweise in der Möbel- bzw. Plattenindustrie erfordert es, daß die Topfzeiten der aus den Komponenten (A) und (B) besteßenden Gemische über 24 h liegen.

Mit (B) Komponenten, die Melamin-/Harnstoffharzgemische als Bindemittel enthalten, werden längere Topfzeiten erreicht als mit (B) Komponenten, die reine Melaminharze als Bindemittel enthalten. Je höher der Harnstoffharzgehalt in der (B) Komponente ist, desto länger wird die Topfzeit und desto geringer wird die Reaktivität der (B) Komponente.

Beim Einsatz von Melamin-/Harnstoffharzgemischen ist also darauf zu achten, daß die Reaktivität der Komponente (B) nicht so weit absinkt, daß das Lacksystem unter den oben beschrieben Applikationsbedingungen nicht mehr ausreichend aushärtet. Der optimale Harnstoffharzgehalt kann vom Durchschnittsfachmann mit einfachen Mitteln bestimmt werden.

Geeignete Melamin-/Harnstoffharzgemische enthalten ein Gewichtsteil Harnstoffharz und 1 bis 10 Gewichtsteile Melaminharz.

Gute Beschichtungsergebnisse und Topfzeiten (Topfzeit bei Raumtemperatur bis zu 20 Tagen) können erreicht werden, wenn die Komponenten (A) und (B) in einem solchen Verhältnis gemischt werden, daß auf ein Gewichtsteil selbstvemetzendes Polyacrylatharz 0,4 bis 1, 0, bevorzugt 0,6 bis 0,8 Gewichtsteile Melaminharz oder 0,4 bis 1,5, bevorzugt 1,0 bis 1,2 Gewichtsteile Melamin-/Harnstoffharzgemisch kommen.

Sobald das Gemisch aus den Komponenten (A) und (B) appliziert worden ist und auf eine temperatur von 140 bis 210 °C gebracht worden ist, härtet es innerhalb von 10 bis 55 Sekunden, in der Regel innerhalb von 10 bis 20 Sekunden soweit aus, daß die dabei entstandenen Lackflächen die weiteren Verfahrensschritte - insbesondere die in steigendem Maße angewandten verschärften Preßbedingungen - ohne Blockeigenschaften oder Verfärbungen zu zeigen, schadlos überstehen.

Ein besonders großer Vorteil der erfindungsgemäß eingesetzten Lacksysteme liegt darin, daß sie mit einer für eine hohe Deckfähigkeit notwendigen Menge an Pigmenten pigmentiert werden können und dennoch auch nach Anwendung von verschärften Preßbedingungen noch Oberflächen mit so guten Eigenschaften liefern, daß die Applikation eines schützenden Klarlacks nicht notwendig ist.

So zeigen die mit dem erfindungsgemäßen Verfahren hergestellten Oberflächen Metallabriebeigenschaften und Kratzfestigkeitswerte, die sonst nur mit zweischichtig applizierten Systemen (pigmentierter Basislack, schützender Klarlack) erreicht werden können. (Die Metallabriebeigenschaften können leicht mit Hilfe des sogenannten "Ringtestes" ermittelt werden. Dabei wird mit einem z. B. aus Weißgold bestehenden Fingerring mehrfach über die zu testende Oberfläche geschabt. Wenn danach eine Markierung sichtbar bleibt, die durch leichtes Wischen mit einem Tuch nicht wieder entfernbar ist, dann liegen schlechte Metallabriebeigenschaften vor.)

Weiter erfüllen die mit dem erfindungsgemäßen Verfahren hergestellten Beschichtungen nahezu alle der in der oben aufgeführten Gruppe A der DIN-Norm 68861 aufgestellten Forderungen. Besonders sei hervorgehoben, daß die mit dem erfindungsgemäßen verfahren hergestellten Oberflächen bei den Tests kein bzw. nur ein sehr geringes Quellverhalten zeigen und daß sie eine besonders gute Resistenz gegen Pulverkaffee aufweisen.

Weiter haben die nach dem erfindungsgemäßen Verfahren beschichteten Folien den Vorteil, daß sie sich nicht krümmen oder gar einrollen und daß sie nur sehr geringe Mengen Formaldehyd emittieren.

Die Komponente (A) enthält neben üblichen Additiven 0,1 bis 15 Gew.-%, vorzugsweise 2 bis 10 Gew.-% einer geblockten Säure und 10 bis 90 Gew.-%, vorzugsweise 20 bis 65 Gew.-% einer selbstvernetzenden wäßrigen Polyacrylatdispersion. Die Gewichtsprozentangaben beziehen sich auf das Gesamtgewicht der Komponente (A).

Unter einer geblockten Säure ist ein Säuresalz zu verstehen, das erst bei höheren Temperaturen in freie Säure und Base zerfällt. Die freigesetzte Säure wirkt dann als Vernetzungs- bzw. Härtungskatalysator.

Erfindungsgemäß werden als geblockte Säuren durch Umsetzung einer Säure mit 2-Amino-2-ethylpropandiol-1,3 und/oder 2-Amino-2-methylpropanol hergestellte Säuresalze eingesetzt.

Die geblockten Säuren werden nach gut bekannten Verfahren durch vorzugsweise in Wasser durchgeführte Umsetzungen von Säuren mit Aminen hergestellt.

Als Säuren können alle für den vorliegenden Zweck geeigneten organischen oder anorganischen Säuren, wie z. B. Salzsäure, Phosphorsäure oder P-Toluolsulfonsäure verwendet werden, wobei p-Toluolsulfonsäure bevorzugt eingesetzt wird.

Die selbstvemetzende wäßrige Polyacrylatdispersion besteht aus einer wäßrigen Dispersion eines selbstvernetzenden Polyacrylatharzes, das als die die Selbstvernetzung ermöglichenden Gruppen Säureamidgruppen enthält, die der allgemeinen Strukturfomel -CO-N(R¹)-CH(R²)-OR³ entsprechen, wobei
- R¹ =: H-Atom oder eine -CH(R²)-OR³ Gruppierung
- R² =: H-Atom oder eine -COOR⁴ Gruppe
- R³ =: H-Atom oder 1 bis 10 C-Atome enthaltender Kohlenwasserstoffrest, bevorzugt Methyl-, Ethyl-, (iso)Butylrest
- R⁴ =: Alkylrest mit 1 bis 5 C-Atomen

Die -CO-N(R¹)-CH(R²)-O-R³ Gruppen können sowohl über ein einpolymerisiertes Monomer als auch über eine polymeranalobe Umsetzung in die Polyacrylatmoleküle eingeführt worden sein.

Bevorzugt werden die CO-N(R¹)-CH(R²)-O-R³-Gruppen, in denen R¹ und R² Wasserstoffatome und R³ ein Wasserstoffatom oder ein Alkylrest mit 1 bis 4 C-Atomen, bevorzugt Methyl-, Ethyl-, (iso-)Propyl- oder (iso-) Butyl- bedeutet.

Beschichtungen mit besonders guten Oberflächeneigenschaften werden erhalten, wenn die selbstvernetzbaren Polyacrylatharze neben den obenbeschriebenen Säureamidderivatgruppen auch noch Carboxylgruppen enthalten.

Der Carboxylgruppengehalt des selbstvernetzenden Polyacrylatharzes darf aber nicht so hoch sein, daß das Polyacrylat bei einem pH-Wert von 2 bis 10 in Lösung geht.
In den meisten Fällen genügt es, wenn der Carboxylgruppengeßalt des Polyacrylats deutlich unter dem Wert liegt, der für eine Lösung des Polyacrylats in dem wäßrigen, einen pH von 2 bis 10 aufweist Dispergiermedium notwendig wäre.

Der Fachmann kann mit Hilfe einiger weniger orientierender Versuche feststellen, welcher Carboxygruppengehalt er für seine jeweils vorliegende Problemstellung zu wählen hat.

Das erfindungsgemäß einzusetzende Polyacrylatharz kann neben den Säureamidderivat - und Carboxylgruppen auch noch weitere funktionelle Gruppen, wie z.B. Hydroxylgruppen oder freie Amidgruppen, enthalten.

Die erfindungsgemäß einsetzbaren wäßrigen Dispersionen können nach allgemein bekannten Methoden durch Copolymerisation von (Meth-)Acrylsäureestern, bevorzugt Methyl-, Ethyl-, Propyl- oder Butyl-(meth-)acrylaten, den entsprechenden (Meth-)Acrylsäureamidderivaten und gegebenenfalls einer entsprechenden Menge an Carboxylgruppen tragenden, eine polymerisierbare Doppelbindung enthaltenden Monomeren, z.B. Fumar- oder Maleinsäure, bevorzugt (Meth)-Acrylsäure unter eventueller Mitverwendung geringerer Mengen weiterer Monomere, wie z.B. Vinylacetat, Hydroxyalkyl-(meth)-Acrylaten,(Meth-)Acrylsäureamiden usw. hergestellt werden.

Bevorzugt werden Dispersionen mit folgenden Kenndaten eingesetzt:
- Festkörper: 40 bis 60 Gewichts-%, vorzugsweise 50 Gewichts-%, bezogen auf das Gesamtgewicht der wäßrigen Polyacrylatdispersion.
- Mittlerer Teilchendurchmesser: 0,1 bis 0,5 µm, vorzugsweise 0,2 bis 0,3 µm.
- Minimale Filmbildungstemperatur (MFT): 0 bis 50 °C, vorzugsweise zwischen 20 bis 35 °C.
- Viskosität: 200 bis 5000 mPas, vorzugsweise 200 bis 1000 mPas und
- pH-Wert 2 - 7, vorzugsweise 2 - 4.

Die Komponente (B) enthält 20 bis 90 Gew.-%, vorzugsweise 70 bis 90 Gew.-%, bezogen auf das Gesamtgewicht der Komponente (B) ein in einem wäßrigen Medium dispergiertes oder gelöstes Melaminharz oder ein in einem wäßrigen Medium dispergiertes oder gelöstes Melamin-/Harnstoffharzgemisch .

Bei den wasserverdünnbaren Melaminharzen handelt es sich um allgemein bekannte in der Regel veretherte Melamin-Formaldehyd-Umsetzungsprodukte.

Die Wasserverdünnbarkeit der Melaminharze hängt, abgesehen vom Kondensationsgrad, der möglichst niedrig sein soll, von der Veretherungskomponente ab, wobei nur die niedrigsten Glieder der Alkanolreihe wasserlöslicße Kondensate ergeben. Die größte Bedeutung haben die Hexamethoxymethylmelaminharze. Bei Verwendung von Lösungsvermittlern können auch butanolveretherte Melaminharze in wäßriger Phase dispergiert werden.

Als Beispiele für erfindungsgemäß einsetzbare Melaminharze seien die im Handel unter dem Markennamen Cymel 300,,301, 303, Luwipal 068, 066, Beetle BE 3745 oder Maprenal MF 900, 910 erhältlichen nicht plastifizierten Hexamethoxymethylmelaminharze genannt.

Bei den Harnstoffharzen handelt es sich um allgemein bekannte wasserverdünnbare Harnstoff-Formaldehyd-Umsetzungsprodukte.

Als Beispiele für erfindungsgemäß einsetzbare Harnstoffharze seien die im Handel unter dem Markennamen Dynomin UM 15, Resamin VHW 3525 oder Plastopal ... erhältlichen plastifizierten bzw. nicht plastifizierten Harnstoff-Formaldehyd-Umsetzungsprodukte genannt.

Die Finish-Folien und Endloskanten werden mit eigens dafür entwikelten Maschinen lackiert. Als Lackauftrags- bzw. Dosiereinrichtungen stehen Rasterwalzen oder Drahtrakeln zur Verfügung. Die Lackauftragsmenge liegt üblicherweise zwischen 5 und 60g/m² bei einer Naßfilmschichtdicke von 10 bis 80 µm. Zur Lacktrocknung werden üblicherweise Trockenkanäle mit beheizter Luft, sog. Konvektoren oder IR-Strahler oder Kombinationen aus beiden eingesetzt Die Papierbahn wird nach der Trocknung als rolle aufgewickelt und in dieser Form in die Möbelindustrie geliefert.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiele für die Komponente (A) (alle Mengenangaben beziehen sich auf 100 Teile der Komponente (A))

### (A)-1

60 Teile einer selbstvernetzenden Acrylatdispersion mit einem Festkörper von 60 Gew.-%, einem mittleren Teilchendurchmesser von 0,3 µm, einem pH-Wert von 2 bis 3 und einer Viskosität zwischen 1000 und 4000 mPas, die Methylolamidgruppen enthält, werden mit 0,5 Teilen 2-Amino-2-Methylpropanol, 0,5 Teilen eines Mineralöl und Phosphorsäureester enthaltenden Entschäumers, 2,0 Teilen eines Benetzungsmittels auf Basis ethoxylierter Fettsäuren, 20 Teilen Titandioxid, 5 Teilen Bariumsulfat und 1 Teil Aluminiumsilikat vereinigt und mittels einer Sandmühle auf eine Komfeinheit von 10 bis 15 µm gemahlen. Danach werden 5 Teile eines plastifizierten Harnstoffharzes, 1 Teil eines Phthalsäuremischesters und 5 Teile 2-amino-2-methylpropanolgeblockten Paratoluolsulfonsäure zugegeben. Der geblockte Härterwird durch Neutralisation von 20 g Paratuluolsulfonsäure mit 10,6 g 2-Amino-2-Methylpropanol in Wasser hergestellt.

### (A)-2

55 Teile einer selbstvernetzenden Acrylatdispersion wie unter (A)-1 beschrieben, werden mit 0,5 Teilen 2-Amino-2-Methylpropanol, 0,5 Teilen eines Mineralöl enthaltenden Entschäumers, 2,0 Teilen eines Benetzungsmittels auf Basis ethoxylierter Alkylphenole, 30 Teile Titandioxid, 5 Teile Bariumsulfat und 1 Teil Aluminiumsilikat vereinigt und mittels einer Sandmühle auf eine Komfeinheit von 10 bis 15 µm gemahlen. Danach werden noch 1 Teil eines ethoxylierten Glycerinderivats, 1 Teil eines Polyethylenwachses und 5 Teile eines geblockten Härters wie unter A 1 beschrieben zugesetzt

### (A)3

Analog wie Beispiel A 2, aber nur 25 Teile Titandioxid und 5 Teile eines aus Eisenoxidrot bestehenden Pigments.

### (A)4

50 Teile einer selbstvernetzenden Acrylatdispersion mit einem Festkörper von 50 Gew.-%, einem mittleren Teilchendurchmesser von 0,2 µm, einem pH-Wert von 2 bis 3, einer Viskosität von unter 250 mPas, die Methylolamidgruppen enthält, werden mit 0,20 Teilen Ammoniak, 0,5 Teilen eines Mineralöl enthaltenden Entschäumers, 2,0 Teilen eines Benetzungsmittels auf Basis ethoxylierter Fettsäuren, 25 Teilen Titandioxid, 5 Teilen Bariumsulfat und 1 Teil Aluminiumsilikat vereinigt und mittels einer Sandmühle auf eine Komfeinheit von 10 bis 15 µm gemahlen. Danach werden 5 Teile eines Polyethylenglykolethers (Molekulargewicht 600), 1 Teil Phthalsäuremischester, 3 Teile eines plastifizierten Harnstoffharzes, 2 Teile Siliziumdioxid als Mattierungsmittel, 0,3 Teile einer Tetrafluorethylen/Ethylencopolymerwachses sowie 5 Teilen eines wie unter (A)-1 beschriebenen geblockten Härters zugesetzt.

Beispiele für die Komponente (B) (alle Mengenangaben beziehen sich auf 100 Teile Komponente (B))

### (B)-1

40 Teile eines Hexamethoxymethylmelaminharzes werden mit 8 Teilen Butylglykol, 4 Teilen Wasser, 45 Teilen eines plastifizierten Harnstoffharzes und 3 Teilen einer Polyethylen-Polypropylenwachsmischung unter Rühren vereint.

### (B)-2

80 Teile eines Hexamethoxymethylmelaminharzes werden mit 10 Teilen Isopropanol und 10 Teilen Wasser versetzt

Die Komponenten (A) und (B) werden gemischt, vorzugsweise im Verhältnis 8 : 2, und das Gemisch wird durch Verdünnen mit Leitungswasser auf eine Viskosität von ca. 20 sec. DIN 4/20°C eingestellt. Man erhält so eine verarbeitungsfertige Lackmischung.

### Beispiele für aus den Komponenten (A) und (B) hergestellte Lacke

Die Komponenten (A) und (B) werden gemischt, auf Verarbeitungsviskosität eingestellt und auf ein weißes Vorimprägnat (60 g/m²) aufgetragen. Der Überzug wird dann 20 sec. bei 160 °C im Düsenkanal getrocknet und anschließend wird das beschichtete Papier normalen und verschärften Preßbedingungen unterworfen (45 sec. bei 140 °C und 5 kp/cm² bzw. 90 sec. bei 175 °C und 25 kp/ cm². Das Gewicht der getrockneten und verpreßten Lackschicht beträgt ca. 20 g/m² Papierfäche.

**Tabelle 1**

| | | | |
|---|---|---|---|
| (A)-4 (Gew.-%) | 90 | 80 | 70 |
| (B)-2 (Gew.-%) | 10 | 20 | 30 |
| Wasserzugabe (Gew.-%) (bezogen auf 100 Gew.-% Gemisch aus (A) + (B)) | 15 | 29 | 35 |
| Verarbeitungsviskosität | alle 20 sec. | DIN 4 | Messbecher |
| Topfzeit | > 5 Tage | >1 Tag | nach wenigen Minuten zähviskos, nach 2 h fest |
| Kaffeetest | 2 | 2 | - |
| Ringfestigkeit | 0-1 | 0 | - |
| Kratzfestigkeit | 2 | 1 | - |
| Deckvermögen | 0 | 0 | - |
| Quellung (Wasser) | 0 | 0 | - |

Die Bewertungsskala entspricht der Bewertungsskala der DIN 68861 Gruppe A.

**Tabelle 2**

| Komponente (A) | A1 | A2 | A3 | A4 |
|---|---|---|---|---|
| Menge (Gew.-%) | 80 | 80 | 80 | 80 |
| Menge (B)-1 (Gew.-%) | 20 | 20 | 20 | 20 |
| Wasserzugabe (Gew.-%) (bezogen auf 100 Gew.-% Gemisch aus (A) + (B)) | 13 | 12 | 14 | 15 |
| Verarbeitungsviskosität | alle 20 sec. | | DIN 4 | Meßbecher |
| Topfzeit | alle | >> 3 Tage | | |
| Kaffeetest | 0-1 | 1 | - | 2 |
| Ringfestigkeit | 0 | 0-1 | 0 | 0-1 |
| Kratzfestigkeit | 1 | 1 | 1 | 1 |
| Deckvermögen | 0 | 0 | 0 | 0 |
| Quellung (Wasser) | 0 | 0 | 0 | 0 |

Die Bewertungsskala entspricht der Bewertungsskala zur DIN 68861 Gruppe A.

## Patentansprüche

1. Verfahren zur einschichtigen Beschichtung von Finish-Folien und Endloskanten, bei dem die Finish-Folien bzw. Endloskanten mit einem wäßrigen, aus den Komponenten (A) und (B) bestehenden, Pigmente und andere übliche Additive enthaltenden Zweikomponentenlack beschichtet und der Naßfilm anschließend 10 bis 55, vorzugsweise 10 bis 20 sec. bei 140 bis 210°C ausgehärtet wird, dadurch gekennzeichnet, daß als Zweikomponentenlack ein Lack verwendet wird, dessen erste Komponente (Komponente (A)) 0,1 bis 15 Gew.-%, vorzugsweise 2 bis 10 Gew.-%, bezogen auf das Gesamtgewicht der Komponente (A) eines Salzes aus einer Säure und einem Amin als potentiellen Härtungskatalysator und 10 bis 90 Gew.-%, vorzugsweise 20 bis 65 Gew.-%, bezogen auf das Gesamtgewicht der Komponente (A) einer wäßrigen Dispersion eines selbstvernetztenden Polyacrylatharzes enthält, wobei als potentieller Härtungskatalysator ein durch Umsetzung einer Säure mit 2-Amino-2-ethylpropandiol-1,3 und/oder 2-Amino-2-methylpropanol hergestelltes Säuresalz eingesetzt wird und das Polyacrylatharz als die die Selbstvernetzung ermöglichenden Gruppen Säureamidderivatgruppen enthält, die der allgemeinen Strukturformel -CO-N(R¹)-CH(R²)-OR³ entsprechen, wobei
R¹ = H-Atom oder eine -CH(R²)-OR³ Gruppierung
R² = H-Atom oder eine -COOR⁴ Gruppe
R³ = H-Atom oder ein 1 bis 10 C-Atome enthaltender Kohlenwasserstoffrest, bevorzugt Methyl-, Ethyl-, (iso)Propyl- oder (iso)Butylrest
R⁴ = Alkylrest mit 1 bis 5 C-Atomen
und daß dessen zweite Komponente (Komponente (B)) 20 bis 90 Gew.-%, vorzugsweise 70 bis 90 Gew.-%, bezogen auf das Gesamtgewicht der Komponente (B) eines in einem wäßrigem Medium dispergierten oder gelösten veretherten Melaminharzes oder eines in einem wäßrigen Medium dispergierten oder gelösten veretherten Melaminharz/Harnstoffharzgemisches enthält und daß dessen Komponenten (A) und (B) vor der Applikation in einem solchen Verhältnis gemischt werden, daß auf ein Gewichtsteil selbstvernetzendes Polyacrylatharz 0,4 bis 1,0, bevorzugt 0,6 bis 0,8 Gewichtsteile verethertes Melaminharz oder 0,4 bis 1,5, bevorzugt 1,0 bis 1,2 Gewichtsteile verethertes Melaminharz/Harnstoffharzgemisch kommen.

2. Verfahren nach Anspruch 1, dadurch gekennzeichnet, daß der potentielle Härtungskatalysator aus einem aus 2-Amino-2-ethylpropandiol-1,3 oder 2-Amino-2-methylpropanol und p-Toluolsulfonsäure hergestellten Salz besteht.

3. Verfahren nach Anspruch 1 oder 2, dadurch gekennzeichnet, daß die die Selbstvernetzung des Polyacrylatharzes ermöglichenden Säureamidderivatgruppen der allgemeinen Strukturformel -CO-NH-CH₂O-R³ entsprechen, wobei R³ ein H-Atom oder ein 1 bis 10 C-Atome enthaltender Kohlenwasserstoffrest, bevorzugt Methyl-, Ethyl-, (iso)-Propyl oder (iso)Butyl bedeutet.

4. Verfahren nach einem der Ansprüche 1 bis 3, dadurch gekennzeichnet, daß das selbstvernetzende Polyacrylatharz neben den -CO-N(R¹)-CH(R²)-O-R³-Gruppen auch noch Carboxylgruppen enthält, wobei der Carboxylgruppengehalt höchstens so hoch sein darf, daß Carboxylgruppengehalt höchstens so hoch sein darf, daß das Polyacrylatharz bei einem pH von 2 bis 10 nicht in Lösung geht.

## Claims

1. Process for single-layered coating of finish films and continuous edges, in which the finish films or continuous edges are coated with an aqueous two-component lacquer consisting of components (A) and (B) and containing pigments and other customary additives and the wet film is then hardened at 140 to 210°C for 10 to 55, preferably 10 to 20 seconds, characterized in that a lacquer is used as the two-component lacquer in which the first component (component (A)) contains 0.1 to 15 % by weight, preferably 2 to 10 % by weight, based on the total weight of component (A), of a salt from an acid and an amine as a potential hardening catalyst and 10 to 90 % by weight, preferably 20 to 65 % by weight, based on the total weight of component (A), of an aqueous dispersion of a self-crosslinking polyacrylate resin, in which the potential hardening catalyst used is an acid salt prepared by reaction of an acid with 2-amino-2-ethylpropane-1,3-diol and/or 2-amino-2-methylpropanol and the polyacrylate resin contains, as the groups which facilitate self-crosslinking, acid amide derivative groups which correspond to the general structural formula -CO-N(R¹)-CH(R²)-OR³, in which R¹ = an H atom or a -CH(R²)-OR³ grouping, R² = an H atom or a -COOR⁴ group, R³ = an H atom or a hydrocarbon radical containing 1 to 10 C atoms, preferably a methyl, ethyl, (iso)propyl or (iso)butyl radical, and R⁴ = an alkyl radical with 1 to 5 C atoms, and in which the second component (component (B)) contains 20 to 90 % by weight, preferably 70 to 90 % by weight, based on the total weight of component (B), of an etherified melamine resin dispersed or dissolved in an aqueous medium or of an etherified melamine resin/urea resin mixture dispersed or dissolved in an aqueous medium, and in which the components (A) and (B) are mixed before application in a ratio such that 0.4 to 1.0, preferably 0.6 to 0.8 part by weight of etherified melamine resin or 0.4 to 1.5, preferably 1.0 to 1.2 parts by weight of etherified melamine resin/urea resin mixture are present per part by weight of self-crosslinking polyacrylate resin.

2. Process according to Claim 1, characterized in that the potential hardening catalyst consists of a salt prepared from 2-amino-2-ethylpropane-1,3-diol or 2-amino-2-methylpropanol and p-toluenesulphonic acid.

3. Process according to Claim 1 or 2, characterized in that the acid amide derivative groups which facilitate self-crosslinking of the polyacrylate resin correspond to the general structural formula -CO-NH-CH₂O-R³, in which R³ denotes a hydrogen atom or a hydrocarbon radical which contains 1 to 10 C atoms, preferably methyl-, ethyl-, (iso)propyl or (iso)butyl.

4. Process according to any one of Claims 1 to 3, characterized in that the self-crosslinking polyacrylate resin furthermore also contains, in addition to the -CO-N(R¹)-CH(R²)-O-R³ groups, carboxyl groups, wherein the carboxyl group content should at most be so high that carboxyl group content should at most be so high that [sic] the polyacrylate resin does not dissolve at a pH of 2 to 10.

## Revendications

1. Procédé pour le revêtement monocouche de feuilles de finition et de bords continus, dans lequel on procède au revêtement des feuilles de finition, respectivement des bords continus, à l'aide d'une laque à deux composants aqueuse, constituée des composants (A) et (B), contenant des pigments et d'autres additifs usuels, et ensuite au durcissement du film mouillé pendant de 10 à 55, de préférence de 10 à 20 secondes à une température de 140 à 210°C, caractérisé en ce que l'on utilise, en tant que laque à deux composants, une laque, dont le premier composant (composant (A)) contient de 0,1 à 15 % en poids, de préférence de 2 à 10 % en poids, par rapport au poids total du composant (A), d'un sel d'un acide et d'une amine en tant que catalyseur de durcissement potentiel, et de 10 à 90 % en poids, de préférence de 20 à 65 % en poids, par rapport au poids total du composant (A), d'une dispersion aqueuse d'une résine de polyacrylate auto-réticulante, un sel d'acide préparé par réaction d'un acide avec du 2-amino-2-éthylpropan-1,3-diol et/ou du 2-amino-2-méthylpropanol étant utilisé en tant que catalyseur de durcissement potentiel, et la résine de polyacrylate contenant, en tant que groupements rendant possible l'auto-réticulation, des groupements de dérivés amide, qui correspondent à la formule de structure générale - CO-N(R¹)-CH(R²)-OR³, dans laquelle
R¹ = atome de H ou un groupement -CH(R²)-OR³
R² = atome de H ou un groupement -COOR⁴
R³ = atome de H ou un résidu hydrocarbure contenant de 1 à 10 atomes de C, de préférence un résidu méthyle, éthyle, (iso)propyle ou (iso)butyle,
R⁴ = un résidu alkyle ayant de 1 à 5 atomes de C, et dont le deuxième composant (composant (B)) contient de 20 à 90 % en poids, de préférence de 70 à 90 % en poids, par rapport au poids total du composant (B), d'une résine de mélamine éthérée dispersée ou dissoute dans un milieu aqueux, ou d'un mélange résine de mélamine/résine d'urée éthéré, dispersé ou dissous dans un milieu aqueux, et dont les composants (A) et (B) sont mélangés avant l'application dans un rapport tel qu'à une partie en poids de résine de polyacrylate auto-réticulante, corresponde de 0,4 à 1,0, de préférence de 0,6 à 0,8 partie en poids de résine de mélamine éthérée, ou de 0,4 à 1,5, de préférence de 1,0 à 1,2 parties en poids de mélange résine de mélamine/résine d'urée éthéré.

2. Procédé selon la revendication 1, caractérisé en ce que le catalyseur de durcissement potentiel se compose d'un sel préparé à partir de 2-amino-2-éthylpropan-1,3-diol ou de 2-amino-2-méthylpropanol et d'acide p-toluènesulfonique.

3. Procédé selon la revendication 1 ou 2, caractérisé en ce que les groupements de dérivés amide, rendant possible l'auto-réticulation de la résine de polyacrylate, correspondent à la formule de structure générale -CO-NH-CH₂O-R³, R³ désignant un atome de H ou un résidu hydrocarbure contenant de 1 à 10 atomes de C, de préférence un résidu méthyle, éthyle, (iso)propyle ou (iso)butyle.

4. Procédé selon l'une quelconque des revendications 1 à 3, caractérisé en ce que la résine de polyacrylate auto-réticulante contient, outre les groupements -CO-N(R¹)-CH(R²)-O-R³, encore également des groupements carboxyle, la teneur en groupements carboxyle devant être au plus à un niveau tel que la résine de polyacrylate ne passe pas en solution pour un pH de 2 à 10.
